# EUROPÄISCHE PATENTSCHRIFT

(11) **EP 1 179 920 B1**
(45) Veröffentlichungstag und Bekanntmachung des Hinweises auf die Patenterteilung: **21.12.2005**
(21) Anmeldenummer: 01117332.5
(22) Anmeldetag: 18.07.2001
(51) Int. Cl.: H04L 12/417, H04J 3/06, B60R 16/02

(54) **Datenbus für mehrere Teilnehmer**
Data bus for a plurality of nodes
Bus de données pour plusieurs noeds

(30) Priorität: 12.08.2000 DE 10039460
(43) Veröffentlichungstag der Anmeldung: 13.02.2002
(73) Patentinhaber: Bayerische Motoren Werke Aktiengesellschaft, 80809 München (DE); DaimlerChrysler AG, 70567 Stuttgart (DE)
(72) Erfinder: Peller, Martin, 80796 München (DE); Berwanger, Josef, 85586 Poing (DE); Ebner, Christian, Dr., 80807 München (DE); Schedl, Anton, Dr., 80798 München (DE); Belschner, Ralf. Dr., 72124 Pliezhausen (DE); Hedenetz, Bernd, 73770 Denkendorf (DE); Minuth, Jürgen, 73079 Süssen (DE)

(56) Entgegenhaltungen:
- EP-A- 0 580 016
- DE-A- 4 343 704
- DE-A- 19 720 401
- SHARROCK S M ET AL: "A CSMA/CD-BASED, INTEGRATED VOICE/DATA PROTOCOL WITH DYNAMIC CHANNEL ALLOCATION" COMPUTER NETWORKS AND ISDN SYSTEMS, NORTH HOLLAND PUBLISHING. AMSTERDAM, NL, Bd. 18, Nr. 1, 24. November 1989 (1989-11-24), Seiten 1-18, XP000070488 ISSN: 0169-7552
- BERWANGER J. ET. AL.: "byteflight - Neues Hochleistungs-Datenbussystem für sicherheitsrelevante Anwendungen" ATZ/MTZ "AUTOMOTIVE ELECTRONICS" (SONDERAUSGABE), Januar 2000 (2000-01), Seiten 60-67, XP002230813

## Beschreibung

Die Erfindung bezieht sich auf ein Verfahren zum Betrieb eines Datenbusses mit den Merkmalen des Oberbegriffs von Patentanspruch 1.

Ein nach einem derartigen Verfahren arbeitender Datenbus ist in der DE 197 20 401 A beschrieben. Er dient beispielsweise bei Gebäuden dazu, die verschiedenen elektrischen Schalter, Stromverbraucher und dergleichen eines Gebäudes schaltungstechnisch miteinander zu verbinden und Steuerbefehle der Teilnehmer untereinander zu vermitteln. Weitere Anwendungsfälle sind die Vernetzung von Maschinensteuerungen im industriellen Bereich, z. B. für eine Fertigungsstrasse, Datenbusse in Flugzeugen für die verschiedenen Antriebs- und Steuerungskomponenten sowie Landfahrzeuge mit den entsprechenden Einrichtungen zum Schalten, Umformen und Verbrauchen elektrischer Energie.

Die Nachrichtenübertragung des bekannten Datenbusses ist synchronisiert. Von einem Busmaster wird ein Synchronisationspuls mit vorgegebener Taktfrequenz ausgegeben. Innerhalb der Zeitspanne zwischen zwei aufeinander folgenden Taktimpulsen gehen die Teilnehmer des Datenbusses innerhalb eines definierten Zeitfensters oder aber zu einem definierten Zeitpunkt auf den Datenbus. Dieser Zeitpunkt kann, wie in der eingangs genannten Druckschrift beschrieben, auch variabel sein und von der Sendepriorität und auch davon abhängen, in welchem Umfang der Datenbus durch die hierarchiehöheren Nachrichten genutzt wurde.

Probleme können sich dann ergeben, wenn der Taktgeber ausfällt. Das Einschalten eines Ersatz-Taktgebers ist aufwendig und problematisch, da in der Regel für die Aktivierung des Ersatz-Taktgebers eine gewisse Zeit erforderlich ist, in der die Buskommunikation evtl. unterbrochen oder zumindest gestört ist.

Der Erfindung liegt die Aufgabe zugrunde, ein Verfahren der eingangs genannten Art zu schaffen, der auch bei Ausfall des Taktgebers eine praktisch ununterbrochene Buskommunikation sichergestellt wird.

Die Erfindung löst diese Aufgabe durch die Merkmale des Patentanspruchs 1.

Beim erfindungsgemäßen Datenbus übernehmen die Teilnehmer mit der höchsten Priorität die Rolle des Taktgebers. Im Gegensatz zu einem reinen Taktgeber, der einen Taktimpuls definierter Form und/oder zeitlicher Länge aussendet und nur der Synchronisation der Teilnehmer dient, besitzen die dann auch als Taktgeber tätigen Teilnehmer mit der höchsten Priorität eine Doppelfunktion. Sie senden weiter ihre Nachrichten (i.f. auch Telegramme genannt) aus und diese dienen für die anderen Teilnehmer des Busses auch als quasi Taktimpuls. Voraussetzung dafür ist lediglich, dass die Teilnehmer mit der höchsten Priorität in zeitlich gleich bleibendem Abstand ihre Nachrichten auszusenden in der Lage sind und die anderen Teilnehmer die Nachricht der Teilnehmer mit der höchsten Priorität (i.f. ranghöchster Teilnehmer genannt) und der zweithöchsten Priorität insbesondere dann, wenn der eigentliche Synchronisations(=Takt-)impuls ausbleibt, erkennen und als Synchronisationsimpuls akzeptieren.

In diesem Zusammenhang ist aus dem Artikel (SHARROCK S M ET AL: 'A CSMA/CD-BASED, INTEGRATED VOICE/DATA PROTOCOL WITH DYNAMIC CHANNEL ALLOCATION' COMPUTER NETWORKS AND ISDN SYSTEMS, NORTH HOLLAND PUBLISHING. AMSTERDAM, NL, Bd. 18, Nr. 1, 24, 24. November 1989 (1989-11-24), Seiten 1-18, XP 000070488 ISSN: 0169-7552 ein Datenbus bekannt, bei dem der Sendezyklus in zwei Teile aufgeteilt ist. Die Grenze zwischen den beiden Teilen ist von Zyklus zu Zyklus variabel. Sie hängt von der sich ändernden Teilnehmerzahl und Belegung des ersten Teils ab. Der zweite Teil ist überhaupt nicht in Kanäle aufgeteilt. Die Auswirkungen eines Ausfalls des Taktgebers sind in dem Artikel nicht angesprochen. Fällt der Taktgeber tatsächlich aus, besitzt die Folge von Telegrammen, die ab Beginn der Zykluszeit versandt werden, einen ständig variierenden Einsatzzeitpunkt und kann nicht als Taktgeberersatz dienen.

Vorteilhafte Weiterbildungen der Erfindung sind in den Patentansprüchen 2 ff. beschrieben und werden anhand des in der Zeichnung beschriebenen Ausführungsbeispiels näher erläutert.

Es zeigt
Fig. 1 den erfindungsgemäßen Nachrichtenverkehr auf einem nicht dargestellten Datenbus
Fig. 2 und 3 den Aufbau der innerhalb des Datenbusses versandten Telegramme.

Die Kommunikation auf dem Datenbus erfolgt auf zwei synchronisierten Datenbussen jeweils im Rahmen eines Kommunikationszyklus, der aus einem statischen Teil (static part) und einem dynamischen Teil (dynamic part) besteht. Die Grenze zwischen statischem und dynamischem Teil und damit die Anzahl m (hier: m=8) der für den statischen Teil vorgesehenen Sender wird vor Beginn der Datenübertragung entsprechen dem jeweiligen Anwendungsfall festgelegt.

Im statischen Teil des Übertragungszyklus werden eine frei konfigurierbaren Anzahl (hier: 8) von Sendeslots identischer Länge vorgesehen. Der Buszugriff der mit A-F bezeichneten Teilnehmer erfolgt nach dem TDMA- = Time Division Multiple Access) Verfahren. Jeder angeschlossene Teilnehmer kann eine oder mehrere Nachrichten synchron auf beiden Kanälen in für ihn reservierten Slots übertragen, beliebige Dateninhalte sind zulässig. Die Möglichkeit, auch zwei Telegramme im statischen Teil zu verschicken, ist für den Teilnehmer B gezeigt. Dieser verschickt seine Telegramme in den Zeitschlitzen 2 (d.h. mit zweithöchster Priorität) und 4. der mit d bezeichnete Dateninhalt kann unterschiedlich oder gleichbleibend sein. Im ersten Fall entspricht B in der Wirkungsweise zwei unabhängigen Teilnehmer. Im andem Fall kann der Dateninhaltentsprechen beispielsweise von betriebsbedingten Änderungen zwischen zwei Sendevorgängen variieren.

Jede Nachricht enthält einen Nachrichten-Identifier ID, der den jeweiligen Zeitschlitz in dem die Nachricht übertragen wird, und damit die Priorität, definiert. Wird eine Nachricht nicht gesendet (z. B. durch Ausfall oder Fehlen eines Teilnehmers), verstreicht die entsprechende Zeit ungenutzt.

Im dynamischen Teil wird die Übertragung gemäß dem in der DE 19720400 A beschriebenen Verfahren der bedarfsweisen Sendung durchgeführt. In jedem Teilnehmer befinden sich Slotzähler, die in allen Teilnehmer synchron hochgezählt werden. Der Buszugriff erfolgt entsprechend der FTDMA (Flexible Time Division Multiple Access) Methode. Während im statischen Teil die Slotzähler nach der vorkonfigurierten Slotzeit hochzählen, werden im dynamischen Part die Slotzähler schon nach kurzer Wartezeit hochgezählt, wenn für die betreffende ID keine Sendeanforderung vorliegt. Wenn die Slotzähler einen Identifier-Wert erreichen, für den eine Sendeanforderung vorliegt, dann wird die Nachricht mit diesem Identifier über den Bus übertragen. Sowohl der Sender als auch die Empfänger- alle Buscontroller im Netz - stoppen die Slotzähler für die Dauer der Übertragung auf dem aktuellen Wert. Nach dem Ende der Übertragung beginnen die Slotzähler weiter hochzuzählen.

### Nachrichtenformat

Das Nachrichtenformat ist für alle Nachrichten sowohl im statischen als auch im dynamischen Teil identisch . Bei gesetztem SYNC-Bit ist im ersten Datenbyte der sogenannte Cycle-Counter kodiert. Der Cycle-Counter ist ein 8 Bit Zähler und zählt die Kommunikationsrunden. Dieser Zähler ist systemweit in allen Teilnehmer gleich.

Der Kommunikationszyklus beginnt mit einem SYNC-Symbol. Die Zeit-Slots werden durch die ID-Nummern identifiziert, die sowohl im statischen wie auch im dynamischen Teil benutzt werden.

Teilnehmer, die mit beiden Kanälen verbunden sind, senden ihre Nachrichten im statischen Teil gleichzeitig auf beiden Kanälen. Im dynamischen Teil kann es Unterschiede in den Zeit-Slots auf den zwei Kanälen geben.

Um die Uhrensynchronisation zu garantieren, werden nur Nachrichten von Teilnehmer verwendet, die an beiden Kanälen angeschlossen sind. Alle Teilnehmer führen die Uhrensynchronisation aus. Dabei werden nur ausgesuchte Nachrichten mit gesetztem Sync-Bit aus dem statischen Teil verwendet.

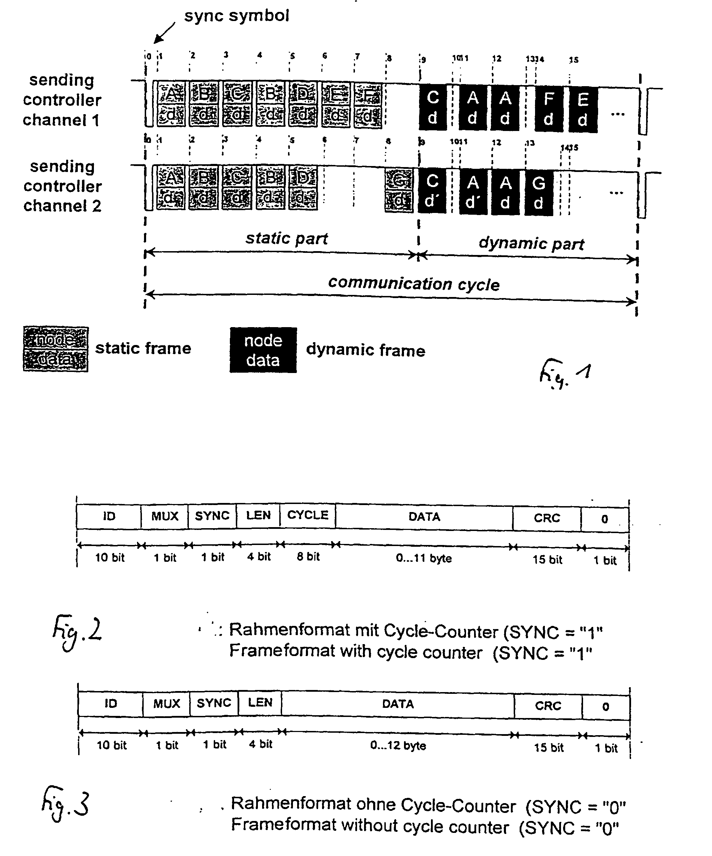

In Fig. 2 ist das Nachrichtenformat bei vorhandenem Cycle-Counter (SYNC = "1") und bei fehlendem Cycle-Counter (SYNC = "0") dargestellt. Dabei bedeuten:
ID: Identifier, 10 Bit, Wertebereich: (1₁₀ ... 1023₁₀), definiert die Slotposition im statischen Teil und die Priorität im dynamischen Teil. Ein kleinerer Identifier bestimmt eine höhere Priorität. ID = 0 ist für das Sync-Symbol reserviert.
   Ein Identifier darf in einem Netzwerk nur einmal verwendet werden. Jeder Teilnehmer kann einen oder mehrere Identifier - sowohl im statischen als auch im dynamischen Teil - verwenden.
MUX: Multiplex-Feld, 1 Bit. Dieses Bit ermöglicht es, unterschiedliche Daten mit dem gleichen Identifier zu senden.
SYNC: Sync-Feld, 1 Bit. Dieses Bit zeigt, ob die Nachricht zur Uhrensynchronisierung verwendet wird und ob das erste Datenbyte den Zykluszähler enthält. (SYNC = "1": Botschaft mit Frame-Counter und Uhrensynchronisation, SYNC = "0": Botschaft ohne Frame-Counter)
LEN: Längen-Feld, 4 Bit, Anzahl der Datenbytes (0₁₀ ... 12₁₀). Ein Wert größer 12 wird als LEN = 12 interpretiert. Bei Nutzung des Zykluszählers (SYNC = 1) wird bei einem Wert größer 11 LEN = 11 gesetzt.
CYCLE: Das CYCLE-Feld kann als Zykluszähler oder als erstes Datenbyte genutzt werden. Der Zykluszähler wird am Anfang eines jeden Kommunikationszyklus in allen Kommunikationscontrollern synchron hochgezählt.
D0 ... D11: Daten Bytes, 0 - 12 Bytes
CRC: 15 Bit Cyclic Redundancy Check. Das letzte Bit wird auf 0 gesetzt.

Damit ist der Datenbus auch bei Ausfall des Taktgebers voll funktionsfähig. Die Erfindung bietet auch die Möglichkeit, auf einen separaten Taktgeber vollständig zu verzichten, sofern die mindestens zwei ranghöchsten Telegramme in zeitlich regelmäßigen Abständen auf den Datenbus gebeben werden.

## Patentansprüche

1. Verfahren für den Betrieb eines Datenbusses für mehrere Teilnehmer,
wobei n Teilnehmer innerhalb eines Sendezyklus mindestens ein Telegramm mit vorgegebener eindeutiger Rangnummer 1,2,3, ... versenden können,
**gekennzeichnet durch** folgende Merkmale:
innerhalb eines Zyklus werden die Telegramme mit den Rangnummern 1,2,3, ...m mit m>=2 nacheinander und regelmäßig
und die Telegramme mit den Rangnummern m+1, m+2, ... bedarfsweise versandt, wobei m+1, m+2, ... eine hierarchische Sendeberechtigung der den Telegrammen zugeordneten Teilnehmern bezeichnet,
die Teilnehmer mit der höchsten Priorität senden in zeitlich gleich bleibendem Abstand ihre Nachrichten aus,
die anderen Teilnehmer erkennen die Nachrichten der Teilnehmer mit der höchsten Priorität und der zweithöchsten Priorität und
falls der eigentliche Synchronisationsimpuls ausbleibt, werden besagte Nachrichten von den anderen Teilnehmern als Synchronisationsimpulse akzeptiert.

2. Verfahren nach Anspruch 1, **dadurch gekennzeichnet, dass** die Zahl m der jeweiligen Anwendung angepasst und bleibend festgelegt wird.

3. Verfahren nach Anspruch 1 oder 2, **dadurch gekennzeichnet, dass** die Sendedauer der ersten m Teilnehmer gleich ist.

4. Verfahren nach einem der Ansprüche 1 bis 3, **dadurch gekennzeichnet, dass** die gesamte Sendezeit für die n Telegramme länger als die Zykluszeit ist.

5. Verfahren nach einem der Ansprüche 1 bis 4, **dadurch gekennzeichnet, dass** die Rangnummerninformation der Telegramme den Beginn des Telegramms markiert.

6. Verfahren nach einem der Ansprüche 1 bis 5, **dadurch gekennzeichnet, dass** die Sender für die Telegramme mit den Rangnummern 1, 2, ...m auch dann senden, wenn der Dateninhalt 0 ist.

7. Verfahren nach Anspruch 6, wobei jeder Teilnehmer aus einem zentralen Prozessor und einer Kommunikationseinheit besteht, die die vom zentralen Prozessor gelieferten Daten auf den Datenbus gibt.

## Claims

1. A method of operating a data bus for a number of subscribers or nodes, wherein n subscribers or nodes can send at least one telegram with a set non-ambiguous rank number 1, 2, 3 within each transmission cycle, **characterised by** the following features:
in each cycle, the telegrams of rank 1, 2, 3, ... m with m not less than 2 are sent successively and at regular intervals and
the telegrams of rank m + 1, m + 2, etc are sent when required, wherein m + 1, m + 2, ... denotes a hierarchical entitlement to transmit by the subscribers or nodes associated with the telegrams,
the highest-priority subscribers transmit their communications at equal intervals,
the other subscribers recognise the communications from the subscribers having the highest priority and the next-highest priority and
if the actual synchronisation pulse fails, the said communications are accepted as synchronisation pulses by the other nodes or subscribers.

2. A method according to claim 1, **characterised in that** the number m is adapted to the particular application and permanently fixed.

3. A method according to claim 1 or 2, **characterised in that** the duration of transmission by the first m subscribers or nodes is equal.

4. A method according to any of claims 1 to 3, **characterised in that** the total duration of transmission of the n telegrams is longer than the cycle time.

5. A method according to any of claims 1 to 4, **characterised in that** the rank number information regarding the telegrams marks the beginning of the telegram.

6. A method according to any of claims 1 to 5, **characterised in that** the transmitters of the telegrams of rank 1, 2, ... m transmit even when the data content is zero.

7. A method according to claim 6, wherein each subscriber or node comprises a central processor and a communication unit whereby the data delivered by the central processor is supplied to the data bus.

## Revendications

1. Procédé d'exploitation d'un bus de données pour plusieurs noeuds, dans lequel n noeuds peuvent envoyer à l'intérieur d'un cycle d'émission au moins un télégramme avec un numéro de rang 1, 2, 3, ... univoque prédéfini,
**caractérisé en ce que**
à l'intérieur d'un cycle les télégrammes avec les numéros de rang 1, 2, 3, ...m sont envoyés avec m >=2 successivement et régulièrement
et les télégrammes avec les numéros de rang m+1, m+2 sont envoyés selon les besoins, m+1, m+2 désignant une autorisation d'émission hiérarchique des noeuds associés aux télégrammes,
les noeuds avec la plus haute priorité envoient leurs messages dans des intervalles de temps constants,
les autres noeuds reconnaissent les messages des noeuds avec la plus haute priorité et la deuxième plus haute priorité, et
en l'absence de l'impulsion de synchronisation proprement dite, ces messages sont acceptés par les autres noeuds comme impulsions de synchronisation.

2. Procédé selon la revendication 1,
**caractérisé en ce que**
le nombre m est adapté à l'application respective et fixé durablement.

3. Procédé selon la revendication 1 ou 2,
**caractérisé en ce que**
la durée d'émission des m premiers noeuds est identique.

4. Procédé selon l'une quelconque des revendications 1 à 3,
**caractérisé en ce que**
le temps d'émission total pour les n télégrammes est plus long que le temps de cycle.

5. Procédé selon l'une quelconque des revendications 1 à 4,
**caractérisé en ce que**
l'information concernant le numéro de rang des télégrammes marque le début du télégramme.

6. Procédé selon l'une quelconque des revendications 1 à 5,
**caractérisé en ce que**
les émetteurs pour les télégrammes avec les numéros de rang 1, 2, ... m émettent également lorsque le contenu de données est 0.

7. Procédé selon la revendication 6,
selon lequel chaque noeud comprend un processeur central et une unité de communication qui envoie les données fournies par le processeur central sur le bus de données.
